# EUROPÄISCHE PATENTANMELDUNG

(11) **EP 1 526 032 A1**
(43) Veröffentlichungstag der Anmeldung: **27.04.2005**
(21) Anmeldenummer: 04023020.3
(22) Anmeldetag: 28.09.2004
(51) Int. Cl.: B60N 2/02, B60N 2/66, B60N 2/44, B60N 2/00

(54) **Lordose und Steuerungsvorrichtung einer Lordose eines Kraftfahrzeugs**

(30) Priorität: 23.10.2003 DE 20316371 U
(71) Anmelder: Brose Fahrzeugteile GmbH & Co. KG, Coburg, 96450 Coburg (DE)
(72) Erfinder: Schüssler, Markus, 97799 Zeitlofs (DE); Rösch, Thomas, 06268 Querfurt (DE); Carl, Ingo, 97469 Gochsheim (DE)

(57) **Zusammenfassung**

Es ist eine elektrische Steuerungsvorrichtung (SV) für eine Lordose vorgesehen, die einen mit einer Verstellmechanik (VM) zur Einstellung der Sitzkontur der Lordose mechanisch gekoppelten Antrieb (E) aufweist. Die Steuerungsvorrichtung (SV) weist dabei zumindest eine Recheneinheit (µC) auf, die entweder eine festverdrahtete Programmstruktur (ROM) aufweist und/oder frei programmierbar ist.

Jedenfalls ist die Recheneinheit (µC) insbesondere durch ein Programm eingerichtet eine Massagebewegung der Lordose zu steuern, wobei die Massagebewegung durch mehrere vorgebbare Sollgeschwindigkeiten (X₁,X₂,X₃) charakterisiert ist. Die Lordose ist eine Verstelleinrichtung, mit der sich die Kontur der Rückenlehne (RL) maßgeblich beeinflussen lässt. Für einen Massageeffekt soll diese Kontur durch vorgebbare Sollgeschwindigkeiten temporär verändert werden. Mehrere Sollgeschwindigkeiten für eine oder mehrere Verstellrichtungen der Lordose, beispielsweise in der Höhe oder Tiefe der Konturausprägung, sind durch die Recheneinheit (µC) steuerbar.

Zur Steuerung mittels der Sollgeschwindigkeiten ist erfindungsgemäß vorgesehen, ein Antriebsmoment des Antriebs (E) an eine aktuelle Last des Antriebs (E) derart anzupassen, dass die Massagebewegung im Wesentlichen unabhängig von der aktuellen, zeitlich oder örtlich veränderlichen Last steuerbar ist. Das Antriebsmoment ist demzufolge durch die Steuereungsvorrichtung (SV) veränderbar. Die aktuelle Last des Antriebs (E) kann aus unterschiedlichen Gründen variieren.

## Beschreibung

Die Erfindung betrifft eine Lordose, eine Steuerungsvorrichtung zur Steuerung der Lordose und einen Datenträger auf dem ein Programm zur Durchführung einer Lordosensteuerung gespeichert ist.

Stützen von Kraftfahrzeugsitzen, welche entsprechend anatomischen Vorgaben geformt werden können, weisen einen stetig steigenden Einsatz auf. Neben Stützen, die eine im wesentlichen ein Druckmaximum vermeidende Haltung der Oberschenkel erlauben, sind die so genannten Lordosenstützen von besonderer Bedeutung. Durch die bevorzugt nach vorne gebeugte Haltung von Sitzenden wird die naturgemäße, nach vorne gerichtete konkave Form der Wirbelsäule durch eine im Wesentlichen konvex nach hinten gekrümmte ersetzt, wodurch neben einer schnelleren Ermüdung eine unerwünschte Verformung der Bandscheiben erfolgt. Um eine derartige unerwünschte Körperhaltung zu vermeiden, sind in Kraftfahrzeugsitzen Lordosenstützen vorgesehen.

Derartige Lordosenstützen sollten höhenverstellbar ausgebildet werden, um den unterschiedlichen Rückenlängen und damit unterschiedlichen Höhen der Lordose angepasst zu sein. Üblicherweise sind derartige Lordosenstützen mit Polster des Kraftfahrzeugsitzes abgedeckt. Dieses Polster ist zu diesem Zwecke beispielsweise mit Schaumstoff gefüllt.

Es sind unterschiedlich technisch ausgebildete Lordosenstützen bekannt. Eine Form besteht im Vorsehen eines aufblasbaren Zylinders im Bereich der Lordose. Diese pneumatische Lordosenverstellung ist beispielsweise aus der US 4,655,505 bekannt. Mehrere Luftkammern können sequenziell über entsprechende Ventile angesteuert werden und der in den Luftkammern befindliche Druck kann mittels eines Ablassventils verringert oder durch ein Pumpenaggregat erhöht und mittels eines Drucksensors gemessen werden.

Eine weitere Lordosenstütze ist derart ausgebildet, dass zwei aneinander angelenkte Teile entlang einer Führung zueinander bzw. auseinander geschoben werden können. Eine variabel ausgebildete Krümmung ist nicht möglich, so dass eine Unterstützung der Lordose lediglich in einem engen Bereich der höchsten Stelle vorgesehen ist, womit lediglich ein oder zwei Wirbel unterstützt werden. Eine derartige Lordosenstütze ist beispielsweise in der WO 95/19123 beschrieben.

Eine weitere Ausführungsform von Lordosenstützen weist einen im Wesentlichen flächigen Stützenteil auf, wobei die Fläche entweder Durchbrechungen besitzt oder einzelne nebeneinander angeordnete Stützelemente aufweist, die gegebenenfalls von der Mitte nach außen sich verjüngend ausgebildet sind. Dieser flächige Stützteil ist mit seinen beiden Endbereichen zueinander bewegbar, so dass eine Wölbung desselben erreichbar ist. Durch unterschiedliche Dickenausbildung gemäß EP 0 698 360 B kann eine erwünschte asymmetrische Form, die im Wesentlichen einer Lordose entspricht, erreicht werden.

Oben angeführte Lordosenstützen sind in der Regel mit einem Rahmen, beispielsweise des Rückenteiles eines Autositzes, verbunden. Hierbei ist der Stützteil der Lordosenstütze beispielsweise mit einem weiteren Rahmen verbunden, der zwei äußere im Wesentlichen parallel zur Wirbelsäule verlaufende Träger aufweist, entlang welcher Gleitelemente bewegbar sind bzw. an welchen Querträger für den wölbbaren Stützteil lagefixiert sind.

Aus der WO 95/19123 ist eine Lordosenstütze bekannt, die keinen wölbbaren Stützteil, sondern zwei aneinander angelenkte Schenkel aufweist. Die Enden der Schenkelteile sind gegeneinander bewegbar und die anderen Enden sind über eine zwei zylindrische Aufnahmen aufweisende Schiene verbunden.

Neben einer manuellen Verstellung derartiger Lordosenstützen, auch Lendenstützeinrichtungen oder Lumbalstütze genannt, sind elektrische oder pneumatisch verstellbare Lordosenverstelleinrichtungen bekannt, die eine elektrisch gesteuerte Einstellung der gewünschten Form ermöglichen. Diese elektrisch gesteuerten Verstellungen werden beispielsweise durch einen Taster oder Schalter bedient. Die Verstellung ist bei den genannten Lordosenstützen an die mechanische Ausgestaltung derselben gebunden.

Eine derartige elektrische Steuerung einer Lordosenverstelleinrichtung ist aus der DE 43 13 757 A1 und der US 5,243,267 bekannt. Diese ermöglicht neben der manuellen Ansteuerung der gewünschten Stützposition die Erzielung eines Massageeffektes, indem ein Motor wiederholt eine Vor- und Rückbewegung der Lumbalplatte innerhalb eines vorgegebenen Zeitraums periodisch bewirkt. Für einen besonderen Massageeffekt erfolgt die Ansteuerung des Motors in der US 5,243,267 in einem Steppbetrieb. Dabei wird der Motor in Abhängigkeit von den Werten einer Fourierreihe in die eine oder andere Richtung in bestimmten Zeitabständen mit entsprechender Polung an die Versorgungsspannung geschalten und bestromt, um eine Massagebewegung zu erzeugen.

Der Erfindung liegt die Aufgabe zu Grunde eine elektrische Steuerungsvorrichtung, eine Lordose und ein Verfahren zur Steuerung einer Lordose eines Kraftfahrzeugsitzes anzugeben, die möglichst verbesserte Komfortfunktionen bei einem einfachen mechanischen Aufbau aufzeigt.

Diese Aufgabe wird durch das Verfahren mit den Merkmalen des Anspruch 1, durch die Steuerungsvorrichtung mit den Merkmalen des Anspruchs 14, durch die Lordose mit den Merkmalen des Anspruchs 23 oder des Anspruchs 26 gelöst. Vorteilhafte Weiterbildungen der Erfindung sind in den Unteransprüchen angegeben.

Demgemäß ist ein Verfahren zur Steuerung eines Antriebs einer Lordose eines Kraftfahrzeugsitzes vorgesehen. Der Antrieb weist hierzu vorzugsweise einen Elektromotor, ein Getriebe und eine Verstellmechanik auf. Dabei wird eine Massagebewegung der Lordose gesteuert, indem mehrere unterschiedliche Sollgeschwindigkeiten und/oder Sollmomente vorgegeben werden, die eine Massagefigur der Massagebewegung charakterisieren. Unter unterschiedlichen Sollgeschwindigkeiten wird dabei verstanden, dass sich diese betragsmäßig unterscheiden. Die Massagebewegung weist vorteilhafterweise mehrere aufeinander folgende Sollgeschwindigkeiten und Sollbeschleunigungen auf, die eine gleichmäßige Bewegung der Lordose bewirken. Unter einer Sollgeschwindigkeit wird dabei beispielsweise eine Solldrehzahl des Antriebsmotors oder eine Sollgeschwindigkeit des zu verstellenden Teil verstanden. Daneben oder in Kombination werden Sollmomente vorteilhaft vorgegeben. Ein Überschussmoment ist die Differenz aus dem momentanen Antriebsmoment und dem entgegenwirkenden Schwergängigkeitsmoment. Ein Sollüberschussmoment wird beispielsweise im Bereich der mechanischen Anschläge vorgegeben, um die mechanische Belastung im Falle einer Blockierung oder eines Einklemmens von Gegenständen zu begrenzen.

Erfindungsgemäß wird eine aktuelle Sollgeschwindigkeit und/oder ein aktuelles Sollmoment in Abhängigkeit von einem Kennfeld und/oder einem mathematischen Algorithmus vorgegeben. Um einen bevorzugten charakteristischen Massageverlauf zu erhalten, wird die aktuelle Sollgeschwindigkeit in Abhängigkeit von einem Kennfeld vorgegeben. In einer vorteilhaften Weiterbildung der Erfindung weist das Kennfeld dabei in eine gespeicherte Matrix eingetragene Werte der Sollgeschwindigkeit auf, die bestimmten Ereignissen, beispielsweise bestimmten Zeitpunkten oder Zeitabständen oder einer oder mehrerer Positionen derselben oder anderer Verstellrichtungen zugeordnet sind. Dabei ist vorzugsweise das Kennfeld adaptierbar. Die Adaption kann in Abhängigkeit von ermittelten Messwerten erfolgen oder vorteilhafterweise vom Benutzer veränderbar sein.

Weiterhin ist erfindungsgemäß vorgesehen, dass die Massagebewegung geregelt wird, indem die Antriebsenergie in Abhängigkeit von der aktuell vorgegebenen Sollgeschwindigkeit und/oder des aktuell vorgegebenen Sollmomentes angepasst wird. Geregelt werden dabei Geschwindigkeiten und/oder Beschleunigungen und/oder Momente, die Bestandteile der Massagebewegung sind.

Eine bevorzugte Weiterbildung der Erfindung sieht vor, dass zur Regelung die aktuelle Istgeschwindigkeit des Antriebs gemessen wird, so dass die charakteristische Massagebewegung im Wesentlichen unabhängig von einer aktuellen, zeitlich oder örtlich veränderlichen Last des Antriebs erfolgt. Zur Messung der Istgeschwindigkeit wird die zeitliche Änderung der Position in der betreffenden Verstellrichtung ausgewertet. Vorteilhafterweise wird zusätzlich der zeitliche und/oder örtliche Verlauf der Sollgeschwindigkeit und/oder des Sollmomentes vorgegeben. Dies können beispielsweise Sollbeschleunigung oder deren zeitliche Ableitungen sein.

Die Erfindung weiterbildend ist vorgesehen, dass zur Vorgabe mindestens eine Sollgeschwindigkeit mindestens einem Steuerungszeitpunkt oder Steuerungszeitraum in der Massagefigur zugeordnet wird. Alternativ oder in Kombination kann die Zuordnung auch zu einer Verstellposition oder einem Verstellbereich in der Massagefigur erfolgen. Gleiches gilt analog für sich allein stehend, als auch in Kombination mit dem zuvor Erörterten für ein Sollmoment, sowie für einen Verlauf des Sollmomentes oder der Sollgeschwindigkeit.

Eine Ausgestaltung dieser Weiterbildung der Erfindung sieht vor, dass zur Zuordnung der aktuelle Steuerungszeitpunkt oder Steuerungszeitraum oder die aktuelle Verstellposition oder der Verstellbereich vorzugsweise mittels einer Logikverifikation ermittelt wird. Aus diesem oder dieser wird eine Speicheradresse ermittelt. Diese Speicheradresse kann beispielsweise in hexadezimaler Form als Zeiger auf einen Speicherbereich vorliegen. Mittels der Speicheradresse wird aus einem Speicher die zugehörige Sollgeschwindigkeit oder der zugehörige Sollgeschwindigkeitsverlauf ausgelesen und beispielsweise in ein Vergleichsregister der Recheneinheit geladen. Alternativ oder in Kombination kann hierzu das zugehörige Sollmoment oder der zugehörige Sollmomentverlauf ausgelesen werden.

Eine bevorzugte Ausbildung dieser Weiterbildung der Erfindung sieht vor, dass mittels der Logikverifikation weitere Größen, insbesondere Mess- und/oder Steuergrößen, denen einer oder mehrere Speicherwerte zugeordnet sind, ausgewertet werden. Hierbei kann beispielsweise die Sollgeschwindigkeit insbesondere in Abhängigkeit von diesen Mess- und/oder Steuergrößen variiert werden. Neben diesen Größen kann vorteilhafterweise zusätzlich eine aktuelle Position des mit dem Antrieb gekoppelten Verstellelementes ausgewertet werden, so dass die Sollgeschwindigkeit zusätzlich in Abhängigkeit von dieser aktuellen Position gesteuert wird.

In einer vorteilhaften Weiterbildung des erfindungsgemäßen Verfahrens wird die Antriebsbewegung in der ersten Verstellrichtung in Abhängigkeit von der Antriebsbewegung in der zweiten Verstellrichtung, insbesondere in Abhängigkeit von der Position, Verstellzeit, der Sollgeschwindigkeit und/oder der Istgeschwindigkeit vorzugsweise automatisch gesteuert. In einer vorteilhaften Ausgestaltung dieser Weiterbildung der Erfindung werden sowohl die Bewegung des ersten Antriebes, als auch die Bewegung des zweiten Antriebes geregelt. Dies ermöglicht die Massagefiguren im Wesentlichen reproduzierbar auszugestalten.

Gemäß einer anderen Weiterbildung der Erfindung ist vorgesehen, dass die beiden Antriebsbewegungen in der ersten Verstellrichtung und in der zweiten Verstellrichtung zueinander synchronisiert werden, indem vorzugsweise in Positionen, in denen die Sollgeschwindigkeit und/oder das Sollmoment geändert werden, eine der beiden Antriebsbewegungen angehalten wird, bis die andere der beiden Antriebsbewegungen eine zugeordnete Sollposition erreicht.

Während des Betriebes der Massagefunktion wird in einer vorteilhaften Weiterbildung der Erfindung die aktuelle Istgeschwindigkeit des Antriebs gemessen, beispielsweise ist die Istgeschwindigkeit die Geschwindigkeit mit der sich die Antriebswelle des Antriebsmotors tatsächlich dreht. Dies kann beispielsweise durch die Auswertung von Messsignalen von einem Geschwindigkeitssensor erfolgen. Alternativ oder in Kombination kann die geschwindigkeit vorteilhafterweise aus der gemessenen Welligkeit des Antriebsstromes und/oder aus Steuerparametern ermittelt werden. Die Istgeschwindigkeit kann hierbei von der Sollgeschwindigkeit abweichen.

Als fortlaufend auftretender Verfahrensschritt ist vorteilhafterweise vorgesehen, dass ein Antriebsmoment des Antriebs angepasst wird, indem die Antriebsenergie in Abhängigkeit von der aktuellen Sollgeschwindigkeit und der aktuellen Istgeschwindigkeit angepasst wird. Die Anpassung erfolgt hierbei derart, dass die für die Massagefigur durch die Sollgeschwindigkeiten charakterisierte Massagebewegung im Wesentlichen unabhängig von einer aktuellen, zeitlich oder örtlich veränderlichen Last des Antriebs gesteuert wird.

Gemäß einem anderen Aspekt der Erfindung ist eine elektrische Steuerungsvorrichtung für eine Lordose vorgesehen, die einen mit einer Verstellmechanik zur Einstellung der Sitzkontur der Lordose mechanisch gekoppelten Antrieb aufweist. Die Steuerungsvorrichtung kann dabei auf einem Halbleiterchip, als so genannte "Smart-Power-Lösung", also als integrierte, intelligente Leistungselektronik ausgebildet sein, oder aus mehreren elektronischen und/oder elektrooptischen Bauelementen bestehen. Unter derartigen Steuerungsvorrichtungen können beispielsweise verstanden werden eine separate, spezifizierte Elektronik (stand alone), ein Sitzsteuergerät (seat memory) zur Steuerung sämtlicher Sitzverstelleinrichtungen oder ein Zentralsteuergerät (body controller), das eine Vielzahl von Funktionen des Kraftfahrzeugs steuert. Die Steuerungsvorrichtung weist dabei zumindest eine Recheneinheit auf, die eine festverdrahtete Programmstruktur aufweist und/oder frei programmierbar ist.

Jedenfalls ist die Recheneinheit insbesondere durch ein Programm eingerichtet, eine Massagebewegung der Lordose durch mehrere vorgebbare Sollgrößen, vorzugsweise durch mehrere unterschiedliche Sollgeschwindigkeiten zu steuern. Dabei ist die Massagebewegung durch diese über eine Massagefigur sich verändernden Sollgrößen charakterisiert. Die Lordose ist eine Verstelleinrichtung, mit der sich die Kontur der Rückenlehne maßgeblich beeinflussen lässt. Für einen Massageeffekt soll diese Kontur vorzugsweise durch vorgebbare Sollgeschwindigkeiten temporär verändert werden. Mehrere Sollgeschwindigkeiten für eine oder mehrere Verstellrichtungen der Lordose, beispielsweise in der Höhe oder Tiefe der Konturausprägung, sind durch die Recheneinheit vorteilhafterweise vorgebbar.

Um einen charakteristischen Massageverlauf zu erhalten ist die Recheneinheit eingerichtet die aktuelle Sollgeschwindigkeit in Abhängigkeit von einem Kennfeld und/oder einem mathematischen Algorithmus vorzugeben. Das Kennfeld umfasst dabei in eine gespeicherte Matrix eingetragene Werte der Sollgeschwindigkeit, die bestimmten Ereignissen, beispielsweise bestimmten Zeitpunkten oder Zeitabständen oder einer oder mehrerer Positionen anderer Verstellrichtungen zugeordnet sind. Dabei ist vorzugsweise das Kennfeld adaptierbar. Die Adaption kann in Abhängigkeit von ermittelten Messwerten erfolgen oder vorteilhafterweise vom Benutzer veränderbar sein.

Eine alternative oder kombinierbar ist die Recheneinheit eingerichtet die aktuelle Sollgeschwindigkeit in Abhängigkeit von einem mathematischen Algorithmus vorzugeben. Diese Abhängigkeit zudem mit der Zuordnung durch ein Kennfeld kombiniert werden, wobei die Kennfelddaten beispielsweise durch den mathematischen Algorithmus gewichtet werden.

Zu einer Regelung der Massagebewegung ist gemäß dieses Aspektes der Erfindung vorgesehen, dass ein Antriebsmoment des Antriebs an eine aktuelle Last des Antriebs derart angepasst wird, dass die Massagebewegung im Wesentlichen unabhängig von der aktuellen, zeitlich oder örtlich veränderlichen Last steuerbar ist. Das Antriebsmoment ist demzufolge durch die Steuerungsvorrichtung veränderbar. Die aktuelle Last des Antriebs kann aus unterschiedlichen Gründen variieren. Beispielsweise kann die vom Nutzer auf die Rückenlehne ausgeübte Muskelkraft je nach Sitzposition, Reaktion des Nutzers oder Form der Lehnenkontur eine erhöhte oder erniedrigte Last bewirken.

Andere Einflussfaktoren sind beispielsweise das Gewicht des Insassen als auch die verstellwegabhängige erhöhte oder erniedrigte Schwergängigkeit der Verstellmechanik der Lordose. Die genannten Einflussfaktoren sind jedoch nicht abschließend. Weitere Faktoren, wie die Härte des Polsters oder der Bekleidung des Nutzers können eine Anpassung des Antriebsmomentes erfordern.

Eine Ausgestaltung der Erfindung sieht vor, dass für eine insbesondere manuelle Verstellung der Lordose in eine für eine Sitzkontur vorgegebene Normalposition die Recheneinheit eingerichtet ist, abweichend von den Sollgeschwindigkeiten der Massagebewegung den Antrieb mit einem nicht angepassten, vorzugsweise konstanten, besonders bevorzugt maximalen Antriebsmoment zu betreiben.

Eine Weiterbildung der Erfindung sieht eine Messvorrichtung zur Bestimmung der aktuellen Istgeschwindigkeit der Massagebewegung vor, wobei zur Anpassung des Antriebsmoments die Recheneinheit eingerichtet ist, in Abhängigkeit von der aktuell gemessenen Istgeschwindigkeit eine Übersetzung eines mechanisch mit der Lordose gekoppelten Getriebes zu variieren. Vorzugsweise wird hierzu ein im Wesentlichen stufenloses Getriebe verwendet, dass eine hinreichend genaue Anpassung des Antriebsmomentes ermöglicht.

Eine besonders vorteilhafte Weiterbildung der Erfindung umfasst mindestens einen Leistungshalbleiter zur Bestromung des Antriebs, wobei ein Eingang des Leistungshalbleiters mit der Recheneinheit verbunden ist. Dabei ist zur Variation der elektrischen Antriebsenergie die Recheneinheit eingerichtet, den Antriebsstrom in Abhängigkeit von der aktuellen Istgeschwindigkeit und der aktuellen Sollgeschwindigkeit der Massagebewegung zu variieren.

In einer besonders vorteilhaften Weiterbildung der Erfindung ist die Recheneinheit eingerichtet zur Messung von einer oder mehreren physikalischen Größen. Eine physikalische Größe ist beispielsweise eine Sitzbelegung, ein Einsitzgewicht, eine Innenraumtemperatur, eine Temperatur des Antriebs oder ein Zustand von Eingabeelementen. Diese physikalische Größe wird zur Steuerung der Sollgeschwindigkeiten von der Recheneinheit ausgewertet.

Das Programm weist hierzu vorteilhafterweise folgenden Verfahrensablauf zur Steuerung des Antriebs der Lordose auf. Dabei wird eine durch vorgebbare Sollgeschwindigkeiten charakterisierte Massagebewegung in einer Massagefigur der Lordose gesteuert. Hierzu wird mindestens eine, mindestens einem Steuerungszeitpunkt oder Steuerungszeitraum in der Massagefigur zugeordnete Sollgeschwindigkeit oder ein zeitlicher Verlauf der Sollgeschwindigkeit eines Antriebs der Lordose vorgegeben. Die Vorgabe kann dafür beispielsweise in einem Speicher abgespeichert werden. Auch ist diese Vorgabe in Abhängigkeit von Verstellereignissen oder Messungen adaptierbar oder vom Benutzer änderbar.

Zum Verstellen in die Normalposition muss die Kontur der Lordose möglichst schnell verstellbar sein, um keine unnötig lange Verstellzeit zu benötigen, die vom Nutzer als störend empfunden würde. Die Massagebewegung ist gegenüber der Verstellbewegung wesentlich langsamer, so dass für einen Arbeitspunkt des Antriebes zwei unterschiedliche Übersetzungen oder Untersetzungen des Getriebes für die Verstellung in die Normalposition und für die Massagebewegung benötigt würde. Die Erfindung umfasst daher zudem eine Lordose eines Kraftfahrzeugsitzes mit einer Verstellmechanik, die zur Einstellung der Sitzkontur mit einem Antrieb mechanisch gekoppelt ist.

Zudem weist die Lordose ein Getriebe zur Kopplung auf, das eine Getriebeübersetzung oder Getriebeuntersetzung aufweist, die für eine Verstellung in eine Normalposition einer Sitzlehnenkontur ausgelegt ist. Die Verstellung in die gewünschte Normalposition kann dabei durch eine Tasterbetätigung beispielsweise zum Verfahren in einer Memoryposition gestartet werden. Der Antrieb muss für eine derartige, an die Verstellung in die Normalposition angepasste Untersetzung oder Übersetzung, für eine Massagebewegung mit entsprechend langsamerer Drehzahl betrieben werden.

Hierzu ist eine Recheneinheit vorgesehen, die zur Steuerung mit dem Antrieb verbunden ist, wobei die Recheneinheit eingerichtet ist, den Antrieb sowohl für die Verstellung in eine Normalposition als auch für eine geregelte Massagebewegung zu steuern. Hierbei ist die Momentangeschwindigkeit der Massagebewegung durch Vorgabe mehrerer unterschiedlicher Sollgeschwindigkeiten variabel und gegenüber der Verstellgeschwindigkeit der Verstellung in die Normalposition reduziert. Die Momentangeschwindigkeit ist dabei ein Teil von der maximalen Verstellgeschwindigkeit in dieser Verstellposition.

Eine vorteilhafte Ausgestaltung der Lordose eines Kraftfahrzeugsitzes dieser Erfindung ist, dass die Sollgeschwindigkeit gegenüber der Verstellgeschwindigkeit um mindestens die Hälfte reduziert ist. Durch die Anpassung des Verstellmomentes in der Regelung der Massagebewegung kann vorzugsweise auch eine weitere Reduktion der Massagegeschwindigkeit auf ein Viertel erreicht werden.

Eine besonders vorteilhafte Weiterbildung der Erfindung sieht vor, dass die Sollgeschwindigkeit in einer Verstellrichtung von einem oder mehreren berechneten oder gemessenen Parametern einer weiteren Verstellrichtung der Lordose abhängig ist.

In diesem Verfahren wird zugleich eine Antriebsbewegung in einer ersten Verstellrichtung und in einer zweiten Verstellrichtung automatisch gesteuert. Die automatische Steuerung erfolgt bevorzugt durch eine Steuerungsvorrichtung, beispielsweise mittels eines Programmablaufs, so dass eine permanente manuelle Steuerung, beispielsweise durch die Betätigung eines Bedienschalters unnötig ist. Die Lordose weist hierzu einen ersten Antrieb für eine Verstellung in einer ersten Verstellrichtung und einen zweiten Antrieb für eine Verstellung in einer zweiten Verstellrichtung auf. Prinzipiell können verschiedene Arten von Antrieben, wie pneumatische oder hydraulische verwendet werden, vorteilhafterweise werden jedoch elektromotorische Antriebe verwendet. Eine Verstellrichtung kann dabei eine beliebige, zum Beispiel bogenförmige, rotatorische oder eine entlang einer Verstellbahn zusammengesetzte Verstellmöglichkeit durch einen Antrieb sein. Bevorzugt wird jedoch jeweils eine linienförmige Verstellung durch einen Antrieb ermöglicht. Die Verstellrichtungen weichen voneinander ab. Demzufolge führt die Verstellung durch den ersten Antrieb zu einer anderen Veränderung der Lehnenkontur als die Verstellung durch den zweiten Antrieb.

Weiterhin kann vorgesehen sein, dass eine Verstellbewegung aus den Antriebsbewegungen in der ersten Verstellrichtung und der zweiten Verstellrichtung zusammengesetzt ist. Vorteilhafterweise ist hierzu die Lordosenstütze der Lordose zumindest in der Sitzlehnenhöhe durch den ersten Antrieb und in der Sitzlehnentiefe durch den zweiten Antrieb verstellbar. Bevorzugt wird dabei das Antriebsmoment zumindest dieses zweiten Antrieb angepasst, um die Lasteinwirkung in Richtung der Sitzlehnentiefe zu berücksichtigen. Die Stützposition ist in diesem Fall durch jeweilige aktuelle Verstellpositionen in der ersten Verstellrichtung und in der zweiten Verstellrichtung definiert. Die zusammengesetzte Verstellbewegung wird dabei erreicht, indem die Verstellung in der ersten Verstellrichtung der Verstellung in der zweiten Verstellrichtung zugeordnet wird. Im einfachsten Fall erfolgt die Zuordnung über die Verstellzeit, indem beispielsweise jedem Verstellzeitpunkt eine Verstellrichtung, eine Verstellgeschwindigkeit oder eine Verstellbeschleunigung dem jeweiligen Antrieb zugeordnet wird.

Eine andere Abhängigkeit ist die der Antriebsbewegungen als Zuordnung. Dabei wird die Antriebsbewegung des zweiten Antriebs in Abhängigkeit von einer ersten Verstellposition und/oder der zeitlichen Änderung dieser ersten Verstellposition gesteuert. Die Abhängigkeit kann dabei als feste Zuordnung programmierbar sein. Besonders vorteilhaft ist diese Abhängigkeit jedoch anhand von weiteren Bedingungen, insbesondere Parametern oder Kenngrößen veränderbar. Die zeitliche Änderung der Verstellposition ist vorteilhafterweise die Verstell-Geschwindigkeit oder die Verstell-Beschleunigung des ersten Antriebs während der Massage. Dient beispielsweise der zweite Antrieb zur Verstellung der Lordosenstütze in der Sitzlehnentiefe und der erste Antrieb zur Verstellung der Lordosenstütze in der Sitzlehnenhöhe wird die Sitzlehnentiefe in Abhängigkeit von der aktuellen Position der Sitzlehnenhöhe gesteuert.

Vorteilhafterweise wird in dem Verfahren zur Steuerung der Lordose die erste Verstellposition in der ersten Verstellrichtung ermittelt. Wird ein mechanisch kommutierter Elektromotor als Antrieb verwendet, wird die Verstellposition vorteilhafterweise aus der durch die mechanische Kommutierung bedingten Welligkeit des Antriebsstroms ermittelt. Eine bevorzugte Ausgestaltung dieser Weiterbildung der Erfindung sieht vor, dass zur Ermittlung der Verstellposition diese mittels eines Sensorsystems sensiert wird. Dieses Positionssensorsystem ist mit dem Antrieb wirkverbunden, vorzugsweise mechanisch gekoppelt. Der Positionssensor ermöglicht dabei eine Abbildung der Verstellposition des mechanischen Verstellweges auf elektronisch auswertbare Signale, beispielsweise ein zu der Verstellposition korrelierendes Spannungssignal.

Ein anderer Aspekt der Erfindung ist eine Lordose eines Kraftfahrzeugsitzes mit einem Synchronmotor, der zur Einstellung der Sitzkontur mit der Verstellmechanik mechanisch, insbesondere mittels eines Getriebes, gekoppelt ist. Zudem ist eine Recheneinheit vorgesehen, die zur Steuerung mit dem Synchronmotor verbunden ist. Dabei ist die Recheneinheit eingerichtet den Synchronmotor sowohl für die Verstellung in eine Normalposition durch eine Verstellgeschwindigkeit als auch für eine Massagebewegung durch mehrere unterschiedliche, vorgebbare Sollgeschwindigkeiten zu steuern.

Der Synchronmotor ist derart konstruktiv ausgelegt, dass eine Istgeschwindigkeit der Massagebewegung der vorgegebenen Sollgeschwindigkeit entspricht und die Istgeschwindigkeit im Wesentlichen unabhängig von der aktuell, zeitlich oder örtlich veränderlichen Last des Synchronmotors ist. Hierzu ist ein derartiger Synchronmotor vorgesehen, der durch eine Frequenzansteuerung in seiner Drehzahl steuerbar ist, wobei der Motor im Falle einer erhöhten Last einen erhöhten Antriebsstrom aufnimmt.

Neben der Steuerungsvorrichtung und der Lordose ist ein Teil der Erfindung noch ein digitales Speichermedium, insbesondere eine Diskette oder ein Halbleiterspeicher, mit elektronisch auslesbaren Steuersignalen, die so mit einer programmierbaren Recheneinheit zusammenwirken können, dass das zuvor beschriebene Verfahren zur Steuerung der Lordose ausgeführt wird.

Zudem ist ein Teil der Erfindung noch ein Rechner-Programm-Produkt mit auf einem maschinenlesbaren Träger gespeicherten Programmcode zur Durchführung des zuvor beschriebenen Verfahrens zur Steuerung der Lordose, wenn das Programmprodukt auf einer Recheneinheit, insbesondere auf einem Mikrocontroller abläuft.

Ein weiterer Teil der Erfindung ist ein Rechen-Programm mit einem Programmcode zur Durchführung des zuvor beschriebenen Verfahrens zur Steuerung der Lordose, wenn das Programmprodukt auf einer Recheneinheit, insbesondere auf einem Mikrocontroller abläuft.

Die Erfindung umfasst neben den dargelegten Prinzipien und Mitteln auch die hierzu möglichen Funktionsumkehrungen und Substitutionen.

Im Folgenden wird die Erfindung anhand von Ausführungsbeispielen bezugnehmend auf zeichnerische Darstellungen näher erläutert.

Dabei zeigen
- FIG 1: eine Steuerungsvorrichtung und einen Antrieb einer Lordose eines Kraftfahrzeugsitzes,
- FIG 2: eine schematische Darstellung eines Kraftfahrzeugsitzes mit drei Verstellrichtungen der Lordose, und
- FIG 3: eine schematische Darstellung eines Beispiels einer Folge unterschiedlicher Sollgeschwindigkeiten eines Antriebs in einer Massagefigur.

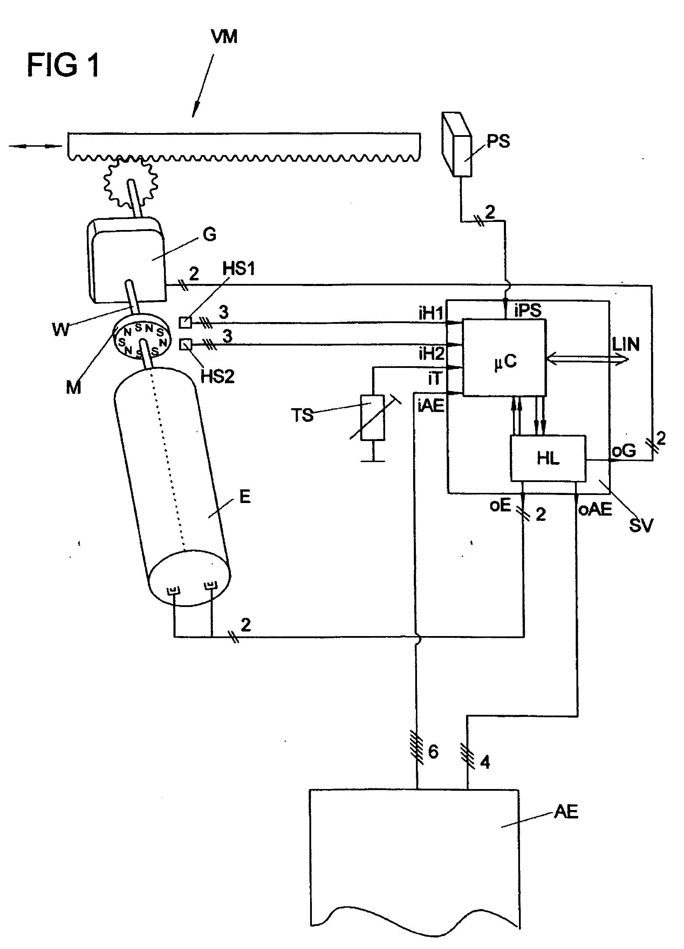

In der Figur 1 sind eine Steuerungsvorrichtung SV und ein Antrieb E einer Lordose eines Kraftfahrzeugsitzes dargestellt. Der Antrieb E ist ein mechanisch kommutierter Elektromotor E, der mit zwei Leitern mit einem Leistungsausgang oE der Steuerungsvorrichtung SV verbunden ist. Über eine Antriebswelle W ist der Elektromotor E mechanisch mit einem Getriebe G gekoppelt. Das Getriebe G ist wiederum mechanisch mit der Verstellmechanik VM der Lordose wirkverbunden. In Figur 1 ist die Verstellmechanik VM schematisch aus einem Zahnrad und einer Zahnstange gebildet.

Um die Bewegung der Lordose zu erfassen, ist ein Messsystem vorgesehen. Ein Teil dieses Messsystems ist ein auf der Antriebswelle W angeordneter Ringmagnet M mit im Umfang wechselnder Polarität N, S. Die Drehbewegung dieses Ringmagneten M wird mittels zweier zueinander in Umfangsrichtung örtlich versetzter Hallsensoren HS1 und HS2 erfasst. Aus der Phasenlage der Hallsignale wird die Drehrichtung des Antriebs E bestimmt, während aus der zeitlichen Abfolge der detektierten Polaritätswechsel eine Position eines zu verstellenden Elementes der Lordose, eine Drehgeschwindigkeit und eine Drehbeschleunigung des Antriebs E bestimmt werden kann. Zur Detektion sind die beiden Hallsensoren HS1 und HS2 jeweils mit einem Eingang iH1 und iH2 der Steuerungsvorrichtung SV verbunden.

Weiterhin wird ein Positionssensor PS verwendet, um eine oder mehrere Positionen des zu verstellenden Elementes der Verstellmechanik VM zu messen. Beispielsweise ist der Positionssensor PS ein Endlagenschalter, durch den bei Erreichen der Endlage des zu verstellenden Elementes der Verstellmechanik VM über eine Signalleitung ein Positionssignal an einen Eingang iPS der Steuerungsvorrichtung SV übertragbar ist.

Weiterhin ist die Steuerungsvorrichtung SV über eine Leitung mit dem Getriebe G verbunden, wobei das Getriebe G eine durch die Steuerungsvorrichtung SV stellbare stufenlose Untersetzung aufweist. Mittels des stufenlosen Getriebes G ist durch die Steuerungsvorrichtung SV durch Variation der Untersetzung das in Abhängigkeit von der vorliegenden Last benötigte Moment der aus dem Elektromotor E und dem Getriebe G bestehenden Antriebsvorrichtung steuerbar.

Die Steuerungsvorrichtung SV weist zur Messung und Auswertung der Sensorsignale an den Signaleingängen iH1, iH2 und iPS, sowie an weiteren Messsignaleingänge iT und iAE einen Mikrocontroller µC auf, der mit den Signaleingängen iH1, iH2, iPS, iT und iAE verbunden ist. Beispielsweise ist der Mikrocontroller mit einem Temperatursensor TS verbunden. Der Mikrocontroller µC weist Analogeingänge und Digitaleingänge auf, die zur Vereinfachung in Figur 1 nicht dargestellt sind. Weiterhin ist der Mikrocontroller µC mit einer Leistungsschalteranordnung HL zur Steuerung verbunden. Die Leistungsschalteranordnung HL besteht beispielsweise aus mehreren Halbleiterbrücken oder Relais, die eine gesteuerte Bestromung des Elektromotors E und des Getriebes G ermöglichen.

Die Steuerung der Höhe der jeweiligen Bestromung wird durch den Mikrocontroller µC mittels eines pulsweiten-modulierten Steuersignals (PWM), mit dem ein oder mehrere Leistungshalbleiter der Leistungsschalteranordnung HL angesteuert und in Abhängigkeit vom Tastverhältnis des Steuersignals durchgesteuert werden. Werden so genannte Sense-FET-Leistungshalbleiter oder so genannte "shunt-Widerstände" verwendet, kann zudem der Mittelwert als auch die Welligkeit des Motorstroms des Elektromotors E gemessen und zur Steuerung durch den Mikrocontroller µC ausgewertet werden.

Zudem ist die Steuerungsvorrichtung SV mit weiteren Elektroniken verbunden. Zur Kommunikation mit den weiteren Elektroniken ist ein Bussystem LIN, im Ausführungsbeispiel der Figur 1 ein LIN-Bussystem vorgesehen. Über das LIN-Bussystem ist die Lordose durch andere Steuergeräte, beispielsweise einem Zentralsteuergerät des Kraftfahrzeugs oder durch jeden anderen Knoten des LIN-Bussystems fernsteuerbar. Zudem ist die Steuerungsvorrichtung SV mit weiteren, in Figur 1 als "black-box" dargestellten Antriebseinheiten AE zur Bestromung von Motoren oder Getrieben über Leistungsausgänge oAE und zur Messung von Bewegungen dieser Antriebseinheiten AE mittels nicht dargestellten Sensoren über Messeingänge iAE verbunden.

Der Mikrocontroller µC der in Figur 1 dargestellten Steuerungsvorrichtung SV ist mit einem Steuerungsprogramm konfiguriert, welches bewirkt, dass eine durch vorgebbare Sollgeschwindigkeiten charakterisierte Massagebewegung in einer Massagefigur der Lordose gesteuert wird (in Figur 1 nicht dargestellt). Diese Sollgeschwindigkeiten sind in einem in Figur 1 nicht dargestellten Speicher, insbesondere einem nichtflüchtigen Speicher des Mikrocontroller µC gespeichert. Die jeweils gerade aktuelle Sollgeschwindigkeit der Antriebsbewegung des Elektromotors E wird aus diesem Speicher ausgelesen. Durch das zeitlich aufeinanderfolgende Auslesen verschiedener Sollgeschwindigkeiten wird die Verstellmechanik VM in der Massagefigur oder als Teil der Massagefigur, die sich noch aus weiteren Bewegungen weiterer Antriebseinheiten AE zusammensetzen kann, bewegt.

Neben konstanten Sollgeschwindigkeiten sind auch zeitliche Verläufe, beispielsweise Sollgeschwindigkeitsrampen im Speicher des Mikrocontrollers µC gespeichert und auslesbar. Die Sollgeschwindigkeiten sind einer Verstelldauer innerhalb der Massagefigur zugeordnet. Dabei soll das zu verstellende Element der Lordose durch die Verstellmechanik VM von Position A in Position B mit der Sollgeschwindigkeit X verstellt werden. Hierbei ist unter Sollgeschwindigkeit X eine Führungsgröße eines Regelkreises und unter einer Istgeschwindigkeit die Regelgröße zu versteshen. Daher ist unter der Sollgeschwindigkeit X nicht die mittlere Geschwindigkeit zu verstehen, die sich beispielsweise aus einem Steppbetrieb ergibt. Zum Erreichen der Position wird demzufolge die Sollgeschwindigkeit X und zur Bewegung von Position A nach Position B benötigte Verstelldauer, beispielsweise 5 Sekunden vorgegeben.

Wird während der Verstellung detektiert, dass die mit den Hallsensoren HS1 oder HS2 bestimmte Istgeschwindigkeit des Elektromotors E der Sollgeschwindigkeit nicht entspricht, weil beispielsweise die auf die Verstellmechanik VM wirkende Last, beispielsweise eines überdurchschnittlich schweren Benutzers des Kraftfahrzeugsitzes, erhöht ist. Hierzu wird die aktuelle Istgeschwindigkeit des Antriebs gemessen und durch den Mikrocontroller µC ausgewertet.

Um die gewünschte Zielposition B noch innerhalb der vorgegebenen Verstelldauer zu erreichen, wird ein Antriebsmoment des Antriebs, der aus dem Elektromotor E und dem Getriebe G besteht, angepasst, indem die Antriebsenergie durch das pulsweitenmodulierte Steuersignal durch den Mikrocontroller in Abhängigkeit von der aktuellen Sollgeschwindigkeit und der aktuellen gemessenen Istgeschwindigkeit angepasst wird. Mit der Anpassung des Antriebsmomentes erfolgt die charakteristische Massagebewegung im Wesentlichen unabhängig von einer aktuellen, zeitlich oder örtlich veränderlichen Last des Antriebs. Für die gewünschte Unabhängigkeit dieser Geschwindigkeitszeitsteuerung kann beispielsweise ein P-, PI-, oder PID-Regelkreis verwendet werden.

Damit der Mikrocontroller µC die aktuell korrekte Sollgeschwindigkeit aus dem Speicher auslesen kann, ist die jeweils aktuelle Sollgeschwindigkeit oder der aktuelle zeitliche Verlauf der Sollgeschwindigkeit einem Steuerungszeitpunkt oder Steuerungszeitraum innerhalb der Massagefigur zugeordnet. Alternativ oder in Kombination kann eine Zuordnung auch zu einer Position oder einem Positionsbereich erfolgen. Die Zuordnung erfolgt mittels eines Kennfeldes, das in dem Speicher des Mikrocontrollers µC beispielsweise als Matrix eingelesen ist. Die Zuordnung ist dabei beispielsweise abhängig von einem Zeitwert eines Zeitgebers (in Figur 1 nicht dargestellt) des Mikrocontrollers µC, der wiederum einem Zeitpunkt innerhalb der Massagefigur zugeordnet ist.

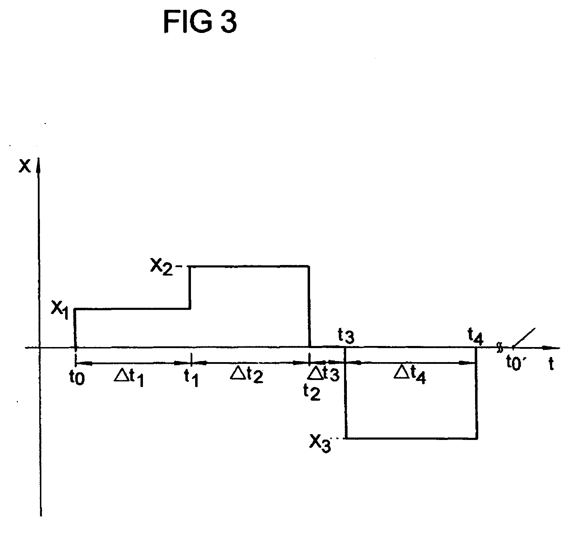

Eine Aufeinanderfolge von Sollgeschwindigkeiten des Elektromotors E ist als Ausführungsbeispiel in Figur 3 als Zeitdiagramm schematisch dargestellt. Dabei entspricht dem Sinngehalt der Regelung, dass zumindest eine Sollgeschwindigkeit von der Maximalgeschwindigkeit (durch dauerhaftes Anlegen der gesamten Batteriespannung an den Antriebsmotor) und der Geschwindigkeit Null verschieden ist. Die Massagebewegung beginnt im Zeitpunkt t₀. Die Massagebewegung wird beispielsweise durch die Betätigung eines Massagetasters durch den Benutzer zu diesem Zeitpunkt t₀ gestartet. Aus dem Speicher des Mikrocontrollers µC werden die erste Sollgeschwindigkeit X, und die erste Verstelldauer Δt₁ ausgelesen. Aufgrund der festgelegten ersten Sollgeschwindigkeit X₁ und der ersten Verstelldauer Δt₁ wird innerhalb dieser Zeit ein bestimmter, mittels des Sollgeschwindigkeits-Verstelldauer-Verhältnisses vorgesehener Verstellort erreicht, unabhängig davon, welche Lastverhältnisse innerhalb dieser Verstelldauer Δt₁ vorlagen.

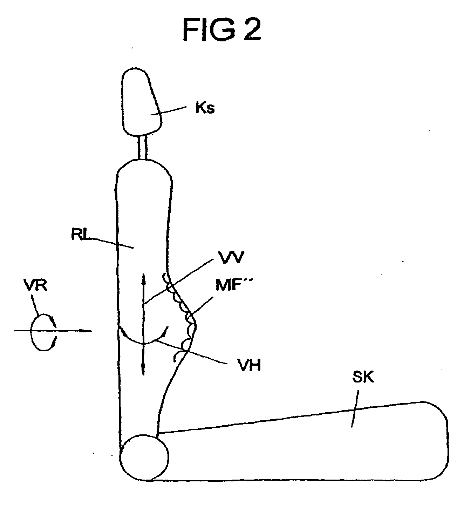

Mit Ende der ersten Verstelldauer Δt₁ wird die nächstfolgende Geschwindigkeits-Zeitpaarung Δt₂ und X₂ aus dem Speicher ausgelesen, die dem Ende der ersten Verstelldauer Δt₁ zum Zeitpunkt t₁ zugeordnet ist. Während der zweiten Verstelldauer Δt₂ wird derselbe Antrieb mit der zweiten, gegenüber der ersten Sollgeschwindigkeit X₁ erhöhten Sollgeschwindigkeit X₂ weiter verstellt. Das Zeit-Weg-Integral der beiden Verstellzeiten Δt₁ und Δt₂ ist beispielsweise so gewählt, dass das zu verstellende Element der Lordose im Wesentlichen den zuvor genannten Punkt B erreicht. Im Punkt B verharrt diese Bewegung in diese Verstellrichtung für die Ruhezeit Δt₃. Nachfolgend wird das zu verstellende Element der Lordose mit der Sollgeschwindigkeit X₃ innerhalb der Verstelldauer Δt₄ in die Ausgangsposition A zurückbewegt, die zum Zeitpunkt t₄ erreicht wird. Innerhalb der Massagefigur wird also das vom Elektromotor E verstellte Element zwischen den Zeitpunkten t₀ und t₄ von der Ausgangsposition A zur Position B und zurückbewegt. Zeitgleich können weitere Verstellungen der Massagefigur durch den Antrieb AE bewirkt werden, so dass sich die Massagefigur aus mehreren Antriebsbewegungen zusammensetzt, wie im Folgenden im Ausführungsbeispiel zur Figur 2 beschrieben ist.

Dass die Massagebewegung im Wesentlichen unabhängig von der aktuellen, zeitlich oder örtlich veränderlichen Last ist, bedeutet in diesem konkreten Ausführungsbeispiel, dass durch eine Verstellung mit Vorgabe der Sollgeschwindigkeit X₁, X₂, X₃ die gewünschte, innerhalb einer vorgegebenen Verstellzeit t₁, t₂, t₄ zu erreichende Verstellposition A, B mit einem geringen Positionsfehler erreicht wird und der Antrieb E während der Verstellung auch im Falle einer hohen Last nicht stehen bleibt.

Dies gilt auch für die weitere, folgende Massagebewegung, die im Zeitpunkt t₀' beginnt. In FIG 3 ist dabei lediglich der Beginn der Massagebewegung dargestellt. Der Verlauf der Sollgeschwindigkeit X ist eine ansteigende Rampe. Damit auch bei langsamen Geschwindigkeiten der Rampe eine Bewegung des Antriebs und damit der Lordose sichergestellt ist, wird insbesondere für die langsamen Geschwindigkeiten der Rampe das Antriebsmoment entsprechend erhöht. Eine fallende Rampe bis zum Stillstand der Antriebsbewegung ist in Figur 3 nicht dargestellt. Die Anpassung des Antriebsmomentes gilt für eine fallende Rampe jedoch analog. Beide Rampenarten dieses konkreten Ausführungsbeispiels haben den Vorteil, das der Antrieb und die Mechanik vor mechanischen Stoßbelastungen geschützt werden und dennoch das Sollgeschwindigkeits-Verstellzeit-Verhältnis die Erreichung einer gewünschten Verstellposition innerhalb der Massagefigur ermöglicht.

In dem in Figur 2 dargestellten Ausführungsbeispiel ist die Steuerungsvorrichtung SV über zwei Treiberausgänge oE und oAE mittels mehrerer Kabel mit jeweils einem Antrieb LAH und LAV der Lordose verbunden. Die Antriebe LAH und LAV verstellen das zu verstellende Element der Lordose in zwei voneinander abweichende Richtungen (VH und VV). Wie in FIG 2 dargestellt, ermöglicht dabei die Richtung VV eine Verstellbewegung in der Sitzlehnenhöhe, das heißt innerhalb der Rückenlehne RL in Richtung der Kopfstütze KS, während die Richtung VH im Wesentlichen quer dazu ausgebildet sein kann, die Lordosenstütze dementsprechend im Wesentlichen in der Sitzlehnentiefe verstellbar ist.

Die FIG 2 zeigt dabei schematisch einen Kraftfahrzeugsitz mit einem Sitzkissen SK, einer Rückenlehne RL und einer Kopfstütze SK. Die Lordose ist in der Rückenlehne RL, in FIG 2 nicht dargestellt, angeordnet. Die Lordose weist in diesem Ausführungsbeispiel der Erfindung drei Verstellrichtungen VH, VV und VR auf. Die Verstellrichtung W erstreckt sich in der Ebene der Rückenlehne RL und ermöglicht eine Verstellung entlang eines Teils der Länge der Wirbelsäule des Benutzers. Die Verstellrichtung W ist dabei geradlinig ausgebildet.

Die Verstellrichtung VH weicht von der Verstellrichtung W in dem Sinne ab, dass diese im Ausführungsbeispiel winkelig zu der Verstellrichtung VV ausgerichtet ist. Die Verstellrichtung VH ermöglicht die Ausprägung der Stützkonturhervorhebung durch die Lordosenstütze einzustellen. In dem dargestellten Ausführungsbeispiel erfolgt diese Verstellung entlang einer bogenförmigen Verstellbahn. Diese beiden und die folgende dritte Verstellrichtung VR sind dabei mechanisch unabhängig voneinander durch den jeweiligen Antrieb verstellbar. Doch sind die Verstellungen derart miteinander gekoppelt, dass diese Verstellrichtungen mit ein und demselben Stützelement der Lordose mechanisch verbunden sind.

Die dritte Verstellrichtung VR ist insbesondere für eine spezifische Massagefunktion ausgelegt. Sie ermöglicht eine kreisförmige, rotatorische Bewegung des zu verstellenden Stützelementes der Lordose. In Kombination mit den anderen beiden Verstellrichtungen W und VH können komplexe Massagefiguren programmiert werden. Eine derartige komplexe Bewegung ist schematisch durch die Massagefigur MF" dargestellt, die auch in Abhängigkeit von der zuvor eingestellten Position oder einer Memoryposition konfigurierbar ist, so dass die Massagefigur der Kontur des Sitzes in der gewünschten Normalposition (vor und nach der Massage) angepasst ist.

### Bezugszeichenliste

- E: Elektromotor
- W: Antriebswelle
- M: Ringmagnet
- G: stufenloses Getriebe
- VM: Verstellmechanik
- HS1, HS2: Hallsensor
- PS: Positionssensor
- TS: Temperatursensor
- SV: Steuerungsvorrichtung, Türsteüergerät
- µC: Mikrocontroller
- HL: Leistungsschalter, Halbleiterbrücke
- AE: Antriebselektronik
- iH1, iH2, iT, iPS, iAE: Eingänge, analog oder digital
- oE, oG, oAE: Ausgänge, Leistungsausgänge
- LIN: LIN-Busverbindung
- Ks: Kopfstütze
- RL: Rückenlehne
- SK: Sitzkissen, Sitzwanne
- W, VR, VH: Verstellrichtungen
- MF": Massagefigur
- X, X₁, X₂, X₃: Sollgeschwindigkeit
- Δt₁, Δt₂, Δt₃, Δt₄,: Verstelldauer innerhalb der Massagefigur
- t₀, t₁, t₂, t₃, t₄, to': Zeitpunkt innerhalb der Massagefigur
- t: Zeit

## Patentansprüche

1. Verfahren zur Steuerung eines Antriebs (E, G) einer Lordose eines Kraftfahrzeugsitzes, wobei
eine Massagebewegung der Lordose gesteuert wird, indem
- mehrere unterschiedliche Sollgeschwindigkeiten (X₁, X₂, X₃) und/oder Sollmomente vorgegeben werden, die eine Massagefigur (MF") der Massagebewegung charakterisieren,
- eine aktuelle Sollgeschwindigkeit (X₁, X₂, X₃) und/oder ein aktuelles Sollmoment in Abhängigkeit von einem Kennfeld und/oder einem mathematischen Algorithmus vorgegeben wird, und
- die Massagebewegung geregelt wird, indem die Antriebsenergie in Abhängigkeit von der aktuell vorgegebenen Sollgeschwindigkeit (X₁, X₂, X₃) und/oder des aktuell vorgegebenen Sollmomentes angepasst wird.

2. Verfahren nach Anspruch 1,
**dadurch gekennzeichnet, dass**
zur Regelung die aktuelle Istgeschwindigkeit des Antriebs (E, G) gemessen wird, so dass die charakteristische Massagebewegung im Wesentlichen unabhängig von einer aktuellen, zeitlich oder örtlich veränderlichen Last des Antriebs (E, G) erfolgt.

3. Verfahren nach einem der Ansprüche 1 oder 2,
**dadurch gekennzeichnet, dass**
zusätzlich der zeitliche und/oder örtliche Verlauf der Sollgeschwindigkeit (X₁, X₂, X₃) und/oder des Sollmomentes vorgegeben wird.

4. Verfahren nach einem der vorhergehenden Ansprüche,
**dadurch gekennzeichnet, dass**
zur Vorgabe mindestens eine Sollgeschwindigkeit (X₁, X₂, X₃) und/oder ein Sollmoment und/oder deren Verlauf mindestens einem Steuerungszeitpunkt (t₀, t₁, t₂, t₃, t₄, t₀') oder Steuerungszeitraum (Δt₁, Δt₂, Δt₃, Δt₄) oder einer Verstellposition oder einem Verstellbereich in der Massagefigur (MF") zugeordnet wird.

5. Verfahren nach Anspruch 4,
**dadurch gekennzeichnet, dass**
zur Zuordnung
- der aktuelle Steuerungszeitpunkt (t₀, t₁, t₂, t₃, t₄, t₀') oder Steuerungszeitraum (Δt₁, Δt₂, Δt₃, Δt₄) oder die aktuelle Verstellposition oder der Verstellbereich vorzugsweise mittels einer Logikverifikation ermittelt wird,
- aus diesem oder dieser eine Speicheradresse ermittelt wird, und
- aus einem Speicher
die zugehörige Sollgeschwindigkeit (X₁, X₂, X₃) oder der zugehörige Sollgeschwindigkeitsverlauf
und/oder
das zugehörige Sollmoment oder der zugehörige Sollmomentverlauf ausgelesen wird.

6. Verfahren nach Anspruch 5,
**dadurch gekennzeichnet, dass**
mittels der Logikverifikation weitere Größen, insbesondere Mess- und/oder Steuergrößen, denen vorzugsweise ein oder mehrere Speicherwerte zugeordnet sind, ausgewertet werden.

7. Verfahren nach einem der vorhergehenden Ansprüche,
**dadurch gekennzeichnet, dass**
die Sollgeschwindigkeit (X, X₁, X₂, X₃) der Massagebewegung fortlaufend variiert wird und gegenüber einer Verstellgeschwindigkeit der Verstellung in die Normalposition reduziert wird.

8. Verfahren nach Anspruch 7,
**dadurch gekennzeichnet, dass**
die Sollgeschwindigkeit (X, X₁, X₂, X₃) gegenüber der Verstellgeschwindigkeit zumindest abschnittsweise um mindestens Dreißig Prozent, besonders bevorzugt um die Hälfte reduziert wird.

9. Verfahren nach einem der vorhergehenden Ansprüche,
**dadurch gekennzeichnet, dass**
die Sollgeschwindigkeit (X, X₁, X₂, X₃) zusätzlich in Abhängigkeit von der aktuellen Position des mit dem Antrieb (E, G) gekoppelten Verstellelementes gesteuert wird.

10. Verfahren nach einem der vorhergehenden Ansprüche,
wobei die Lordose
- einen ersten Antrieb für eine Verstellung in einer ersten Verstellrichtung (VH) und
- einen zweiten Antrieb für eine Verstellung in einer zweiten Verstellrichtung (VV) aufweist und die Verstellrichtungen (VH, VV) voneinander abweichen,
**dadurch gekennzeichnet, dass**
zur Steuerung zugleich eine Antriebsbewegung in der ersten Verstellrichtung (VH) und in der zweiten Verstellrichtung (VV) automatisch gesteuert wird.

11. Verfahren nach Anspruch 10,
**dadurch gekennzeichnet, dass**
sowohl die Bewegung des ersten Antriebs als auch die Bewegung des zweiten Antriebs geregelt werden.

12. Verfahren nach einem der Ansprüche 10 oder 11,
**dadurch gekennzeichnet, dass**
die Antriebsbewegung in der ersten Verstellrichtung (VH) in Abhängigkeit von der Antriebsbewegung in der zweiten Verstellrichtung (VV), insbesondere in Abhängigkeit von der Position, Verstellzeit, der Sollgeschwindigkeit (X₁, X₂, X₃) und/oder der Istgeschwindigkeit gesteuert wird.

13. Verfahren nach Anspruch 12,
**dadurch gekennzeichnet, dass**
die beiden Antriebsbewegungen in der ersten Verstellrichtung (VH) und in der zweiten Verstellrichtung (VV) zueinander synchronisiert werden, indem vorzugsweise in Positionen, in denen die Sollgeschwindigkeit (X₁, X₂, X₃) und/oder das Sollmoment geändert werden, eine der beiden Antriebsbewegungen angehalten wird, bis die andere der beiden Antriebsbewegungen eine zugeordnete Sollposition erreicht.

14. Elektrische Steuerungsvorrichtung für eine Lordose, die einen mit einer Verstellmechanik (VM) zur Einstellung der Sitzkontur der Lordose mechanisch gekoppelten Antrieb (E, G) aufweist, mit
einer Recheneinheit (µC), die eingerichtet ist
- eine Massagebewegung der Lordose durch mehrere vorgebbare Sollgrößen, vorzugsweise durch mehrere unterschiedliche Sollgeschwindigkeiten (X₁, X₂, X₃) zu steuern,
- die aktuelle Sollgröße, insbesondere die aktuelle Sollgeschwindigkeit (X₁, X₂, X₃) in Abhängigkeit von einem Kennfeld und/oder einem mathematischen Algorithmus vorzugeben und
- zu einer Regelung der Massagebewegung ein Antriebsmoment an eine aktuelle Last des Antriebs (E, G) derart anzupassen, dass die Massagebewegung im Wesentlichen unabhängig von der aktuellen, zeitlich oder örtlich veränderlichen Last durch die Sollgeschwindigkeiten (X₁, X₂, X₃) steuerbar ist.

15. Elektronische Steuerungsvorrichtung nach Anspruch 14,
**gekennzeichnet durch**
eine Messvorrichtung zur Bestimmung der aktuellen Istgeschwindigkeit der Massagebewegung, wobei zur Anpassung des Antriebsmoments die Recheneinheit (µC) eingerichtet ist in Abhängigkeit von der aktuell gemessenen Istgeschwindigkeit eine Übersetzung eines mechanisch mit der Lordose gekoppelten Getriebes (G) zu variieren.

16. Elektronische Steuerungsvorrichtung einem der Ansprüche 14 oder 15,
**gekennzeichnet durch**
eine Messvorrichtung zur Bestimmung der aktuellen Istgeschwindigkeit der Massagebewegung, wobei zur Anpassung des Antriebsmoments die Recheneinheit (µC) eingerichtet ist in Abhängigkeit von der aktuell gemessenen Istgeschwindigkeit eine elektrische Antriebsenergie zu variieren.

17. Elektronische Steuerungsvorrichtung nach Anspruch 16,
**gekennzeichnet durch**
mindestens einen Leistungshalbleiter (HL) zur Bestromung des Antriebs (E, G), wobei ein Eingang des Leistungshalbleiters (HL) mit der Recheneinheit (µC) verbunden ist und zur Variation der elektrischen Antriebsenergie die Recheneinheit (µC) eingerichtet ist den Antriebsstrom in Abhängigkeit von der aktuellen Istgeschwindigkeit und der aktuellen Sollgeschwindigkeit (X₁, X₂, X₃) der Massagebewegung zu variieren.

18. Elektronische Steuerungsvorrichtung einem der Ansprüche 14 bis 17,
**dadurch gekennzeichnet, dass**
für eine (manuelle) Verstellung der Lordose in eine für eine Sitzkontur vorgegebene Normalposition die Recheneinheit (µC) eingerichtet ist abweichend von den Sollgeschwindigkeiten (X₁, X₂, X₃) der Massagebewegung den Antrieb (E, G) mit einem nicht angepassten, vorzugsweise konstanten, besonders bevorzugt maximalen Antriebsmoment zu betreiben.

19. Elektronische Steuerungsvorrichtung nach einem der Ansprüche 14 bis 18,
**dadurch gekennzeichnet, dass**
das Kennfeld, insbesondere in Abhängigkeit von Messwerten adaptierbar ist.

20. Elektronische Steuerungsvorrichtung nach Anspruch 19,
**dadurch gekennzeichnet, dass**
das Kennfeld vom Benutzer veränderbar ist.

21. Elektronische Steuerungsvorrichtung nach einem der Ansprüche 14 bis 20,
**dadurch gekennzeichnet, dass**
die Recheneinheit (µC) eingerichtet ist die aktuelle Sollgeschwindigkeit (X₁, X₂, X₃) einer ersten Verstellrichtung (VH) der Lordose in Abhängigkeit von der Position und/oder Geschwindigkeit eines weiteren Antriebs einer zweiten Verstellrichtung (VV) der Lordose vorzugeben.

22. Elektronische Steuerungsvorrichtung nach einem der Ansprüche 14 bis 21,
**dadurch gekennzeichnet, dass**
die Recheneinheit (µC) eingerichtet ist zur Messung von physikalischen Größen, insbesondere der Sitzbelegung, dem Einsitzgewicht, der Innenraumtemperatur, der Temperatur des Antriebs (E, G), dem Zustand von Eingabeelementen,
die zur Steuerung der Sollgeschwindigkeiten (X₁, X₂, X₃) von der Recheneinheit (µC) auszuwerten sind.

23. Lordose eines Kraftfahrzeugsitzes mit
- einer Verstellmechanik (VM), die zur Einstellung der Sitzkontur mit einem Antrieb (E, G) mechanisch gekoppelt ist,
- einem Getriebe (G) zur Kopplung, das eine Getriebeübersetzung oder Getriebeuntersetzung aufweist, die für eine Verstellung in eine Normalposition einer Sitzlehnenkontur ausgelegt ist,
- einer Recheneinheit (µC), die zur Steuerung mit dem Antrieb (E, G) verbunden ist, wobei die Recheneinheit (µC) eingerichtet ist den Antrieb (E, G) sowohl für die Verstellung in eine Normalposition als auch für eine geregelte Massagebewegung zu steuern, wobei die Momentangeschwindigkeit der Massagebewegung durch die Vorgabe mehrerer unterschiedlicher Sollgeschwindigkeiten (X₁, X₂, X₃) variabel und gegenüber der Verstellgeschwindigkeit der Verstellung in die Normalposition reduziert ist.

24. Lordose eines Kraftfahrzeugsitzes nach Anspruch 23,
**dadurch gekennzeichnet, dass**
die Sollgeschwindigkeit (X₁, X₂, X₃) gegenüber der Verstellgeschwindigkeit zur Verstellung in die Normalposition um mindestens die Hälfte reduziert ist.

25. Lordose eines Kraftfahrzeugsitzes nach Anspruch 23,
**dadurch gekennzeichnet, dass**
die Sollgeschwindigkeit (X₁, X₂, X₃) in einer Verstellrichtung von einem oder mehreren berechneten oder gemessenen Parametern einer weiteren Verstellrichtung der Lordose abhängig ist.

26. Lordose eines Kraftfahrzeugsitzes mit
- einer Verstellmechanik (VM) zur Einstellung der Sitzkontur,
- einem Synchronmotor, der zur Einstellung der Sitzkontur mit der Verstellmechanik (VM) mechanisch, insbesondere mittels eines Getriebes (G), gekoppelt ist, und
- einer Recheneinheit (µC), die zur Steuerung mit dem Synchronmotor verbunden ist, wobei die Recheneinheit (µC) eingerichtet ist den Synchronmotor sowohl für die Verstellung in eine Normalposition durch eine Verstellgeschwindigkeit als auch für eine Massagebewegung durch mehrere unterschiedliche vorgebbare Sollgeschwindigkeiten (X₁, X₂, X₃) zu steuern,
wobei der Synchronmotor derart konstruktiv ausgelegt ist, dass eine Istgeschwindigkeit der Massagebewegung der vorgegebenen Sollgeschwindigkeit (X₁, X₂, X₃) entspricht.

27. Digitales Speichermedium, insbesondere Diskette oder Halbleiterspeicher, mit elektronisch auslesbaren Steuersignalen, die so mit einer programmierbaren Recheneinheit (µC) zusammenwirken können, dass ein Verfahren zumindest nach Anspruch 1 ausgeführt wird.

28. Rechner-Programm-Produkt mit auf einem maschinenlesbaren Träger gespeicherten Programmcode zur Durchführung des Verfahrens zumindest nach Anspruch 1, wenn das Programmprodukt auf einer Recheneinheit (µC) abläuft.

29. Rechen-Programm mit einem Programmcode zur Durchführung des Verfahrens zumindest nach Anspruch 1, wenn das Programmprodukt auf einer Recheneinheit (µC) abläuft.
